# EUROPÄISCHE PATENTANMELDUNG

(11) **EP 0 665 403 A1**
(43) Veröffentlichungstag der Anmeldung: **02.08.1995**
(21) Anmeldenummer: 95100560.2
(22) Anmeldetag: 17.01.1995
(51) Int. Cl.: F16L 47/00, F16L 55/07

(54) **Übergangsstück aus Kunststoff zur Verbindung von Kunststoffrohrleitungen**

(30) Priorität: 27.01.1994 DE 9401396 U
(71) Anmelder: RAFELD KUNSTSTOFFTECHNIK GmbH & Co. KG, 87640 Ebenhofen (DE)
(72) Erfinder: Rafeld, Karl, D-87640 Ebenhofen (DE)
(74) Vertreter: Kern, Wolfgang, Dipl.-Ing.

(57) **Zusammenfassung**

Die Erfindung betrifft ein Übergangsstück aus Kunststoff zur Verbindung von Kunststoffrohrleitungen für Warmwasserheizungen, bestehend aus einem T-förmigen Muffenkörper, in dessen beide miteinander fluchtende Anschlußmuffen Rohrenden der Warmwasserleitungsrohre einschweißbar sind.

Derartige Übergangsstücke werden in zunehmendem Maße bei der Verlegung von aus Kunststoff bestehenden Wasserleitungsrohren eingesetzt, die nach ihrer Befüllung bzw. Wiederfüllung oder auch nach längeren Betriebszeiten entlüftet werden müssen.

Zur Verbesserung der Entlüftung derartiger Heizungsrohrsysteme, insbesondere Wandheizungssysteme, wird vorgeschlagen, daß die den rechtwinkeligen Abzweig bildende Muffe (4) des T-förmigen Muffenkörpers (1) eine Entlüftungskammer (5) für den Heizungswasserkreislauf hat und in ihrer Bodenwand (6) wenigstens eine Entlüftungsbohrung (7) aufweist, die in den von dem Heizungswasser durchströmten Muffenkörperquerschnitt (8) mündet, an den die beiden Anschlußmuffen (2, 3) angrenzen.

## Beschreibung

Die Erfindung betrifft ein Übergangsstück aus Kunststoff zur Verbindung von Kunststoffrohrleitungen für Warmwasserheizungen, bestehend aus einem T-förmigen Muffenkörper, in dessen beide miteinander fluchtende Anschlußmuffen Rohrenden der Warmwasserheizungsrohre einschweißbar sind.

Derartige Übergangsstücke werden in zunehmendem Maße bei der Verlegung von aus Kunststoff bestehenden Wasserleitungsrohren eingesetzt, die selbst unter Putz bzw. im Mauerwerk von Decken und Wänden von Gebäuden liegen. Bei der Verlegung auf oder innerhalb von Gebäudewänden, bei der also die Warmwasserleitungsrohre gewöhnlich in Form von Rohrschlangen mit einer Vielzahl von parallelen, vorzugsweise horizontal angeordneten Ästen zwischen einem Vorlauf und einem Rücklauf übereinanderliegen, stellt sich das Problem der Entlüftung der Rohrleitungen nach deren Füllung bzw. Wiederfüllung oder auch nach längeren Betriebszeiten, da in das Rohrleitungssystem beispielsweise über die vorhanden Ventile und übliche Rohrverbindungselemente Luft eindringen kann. Letzteres führt dazu, daß das System, wenn diese eingedrungene Luft nicht beseitigt wird, nicht vollständig mit Heizungswasser gefüllt wird bzw. gefüllt bleibt, so daß der Heizungswirkungsgrad entsprechend abnimmt. Außerdem kommt es zu "Plätschergeräuschen" in den Leitungen, verursacht dadurch, daß die absteigenden Rohre nicht mit Wasser gefüllt sind.

Bisher wurden zur Entlüftung eines solchen Heizungsrohrsystems besondere Entlüftungsarmaturen benutzt, die gewöhnlich in der Rücklaufleitung eingebaut sind. In den Fällen jedoch, in denen großfläche Wandheizungsrohrschlangenelemente zum Einsatz gelangen, die aus mehreren durch absteigende Vorlaufrohre miteinander verbundenen Feldern zusammengesetzt sind, muß die eingedrungene Luft einen verhältnismäßig langen Weg zurücklegen, um die Entlüftungsarmatur zu erreichen, wobei in Abhängigkeit von der Art und Weise der Verlegung der Heizungsschlangenrohre zu erwarten ist, daß sich innerhalb eines solchen weitläufigen Systems Luftsäcke bilden und eine vollständige Füllung der absteigenden Vorlaufrohre verhindern.

Die Aufgabe der Erfindung besteht deshalb darin, ein Übergangsstück der genannten Art so weiterzuentwickeln, daß es zur Verbesserung der Entlüftung derartiger Heizungsrohrsysteme, insbesondere Wandheizungssysteme, geeignet ist.

Dies wird erfindungsgemäß dadurch erreicht, daß die den rechtwinkeligen Abzweig bildende Muffe des T-förmigen Muffenkörpers eine Entlüftungskammer für den Heizungswasserkreislauf bildet und in ihrer Bodenwand wenigstens eine Entlüftungsbohrung aufweist, die in den von dem Heizungswasser durchströmten Muffenkörperquerschnitt mündet, an den die beiden Anschlußmuffen angrenzen.

Dadurch, daß ein solches Übergangsstück innerhalb einer aus mehreren Heizungsfeldern bestehenden Wandheizung am Ende eines jeden Feldes über dem Vorlaufrohr zum nächsten Feld eingebaut werden kann und seine Entlüftungskammer über die Entlüftungsbohrung mit dem Rücklauf verbindbar ist, indem der T-förmige Muffenkörper in das Rücklaufleitungsrohr eingesetzt wird, übernimmt dieses Übergangsstück eine Entlüftungsfunktion, die überall dort innerhalb des Heizungsrohrsystems zum Einsatz gelangen kann, wo die Wahrscheinlichkeit dafür besteht, daß sich Luft ansammelt. Die Entlüftungsbohrung ist dabei so beschaffen, daß der Heizungskreislauf im Bereich eines solchen Übergangsstücks nicht kurzgeschlossen wird, d.h., das Vorlaufwasser nicht durch die dieser Stelle nachgeschalteten Heizungskreislaufrohre gelangt, sondern unmmittelbar in den Rücklauf strömt. Lediglich die an einer solchen Stelle gesammelte Luft, die aus dem Heizungswasser ausgeschieden ist, hat durch diese Entlüftungsbohrung die Möglichkeit, vom Wasser des Rücklaufs mitgerissen und zu der am Ende des Rücklaufrohres angeordneten Entlüftungsarmatur gefördert zu werden, wo sie ins Freie abgelassen werden kann.

Gemäß einer vorteilhaften Ausgestaltung der Erfindung ist die die wenigstens eine Entlüftungsbohrung aufweisende Bodenwand des Übergangsstücks im Bereich dieser Bohrung vestärkt, wobei diese Verstärkung gemäß einer weiteren Ausgestaltung die Form eines in die Entlüftungskammer hineinragenden Kegels haben kann, in dessen Längsachse die Entlüftungsbohrung angeordnet ist. Dieser Kegel ist so bemessen, daß seine Spitze unter den Spiegel des in der Entlüftungskammer befindlichen Heizungswassers ragt, so daß einerseits die in die Entlüftungskammer aus dem System eintretende Luft, beispielsweise in Form kleiner Bläschen, in die Entlüftungsbohrung eintreten kann, andererseits verhindert wird, daß sich die Entlüftungsbohrung durch auf dem Wasserspiegel aufschwimmende Schmutz- und Feststoffleilchen zugesetzt wird.

Grundsätzlich hat sich bewährt, den Querschnitt der Entlüftungsbohrung etwa 1/10 bis 1/100 des Innenquerschnitts der Entlüftungskammer bzw. der Abzweigmuffe entsprechen zu lassen.

Im übrigen ist die Entlüftungskammer so ausgebildet, daß sie mit Hilfe eines Verbindungsrohrstücks an die oberen Teile der Konvektoren oder Heizungsrohrschlangen der Warmwasserwandheizung anschließbar ist, dort also, wo sich die in den Heizungskreis eingedrungene Luft am ehesten sammelt.

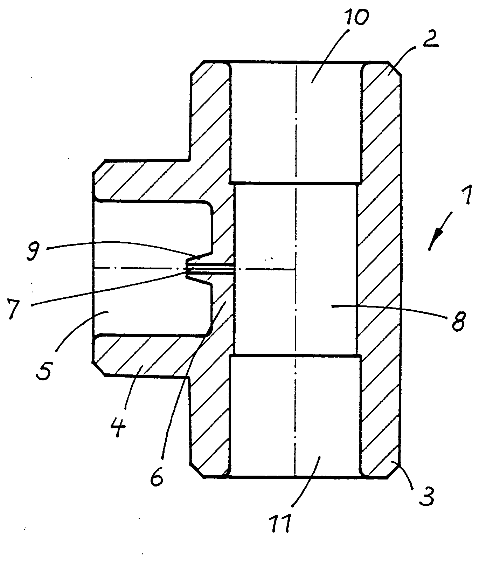

Die Erfindung wird nachfolgend an Hand des in der Zeichnung dargestellten Ausführungsbeispiels weiter erläutert, das im Längsschnitt ein Übergangsstück zeigt.

Das erfindungsgemäße Übergangsstück ist als T-förmiger Muffenkörper 1 ausgebildet, bestehend aus den beiden axial fluchtenden Anschlußmuffen 2, 3, die in das nicht dargestellte Wasserrücklaufrohr einer Wandheizung eingebaut werden derart, daß die Rohrenden in die Querschnitte 10, 11 der genannten Anschlußmuffen eingeschweißt werden. Rechtwinkelig zu den beiden Anschlußmuffen und mittig zu ihnen erstreckt sich die einen Abzweig bildende Muffe 4, welche eine Entlüftungskammer 5 für den Heizwasserkreislauf bildet und in ihrer Bodenwand 6 wenigstens eine Entlüftungsbohrung 7 aufweist, die eine Verbindung zum den Muffenkörperrohrquerschnitt 8 durchströmenden Heizungswasser im Rücklauf des Systems herstellt.

Die Abzweigmuffe 4 ist über ein nicht dargestelltes Verbindungsrohrstück, das in den Muffenquerschnitt eingeschweißt ist, mit dem höchsten Teil eines Wandheizungsrohrschlangenfeldes zu verbinden, so daß die sich in diesem höchsten Teil ansammelnde Luft, die sich aus dem Heizungswasser abscheidet bzw. beim Füllen oder Wiederauffüllen der Heizung mit Wasser aus den Heizungsrohren verdrängt wird, in der Entlüftungskammer 5 sammelt und in die Entlüftungsbohrung 7 eintreten kann, in der von dem durch die Anschlußmuffen 2, 3 bzw. den Muffenquerschnitt 8 hindurchströmenden Rücklaufwasser ein Unterdruck erzeugt wird, durch den die in die Entlüftungsbohrung 7 eintretende Luft vom Rücklaufwasser mitgerissen wird, um mit Hilfe einer in der Rücklaufleitung eingebauten Entlüftungsarmatur aus dem Heizungskreislauf ausgeblasen zu werden.

Die Bodenwand 6 der Lüftungskammer 5 weist im Bereich der Entlüftungsbohrung 7 eine Verstärkung in Form eines sich in die Entlüftungskammer 5 und damit in das in dieser Kammer befindliche Heizungswasser hineinerstreckenden Kegels 9 auf, in dessen Längsachse die Entlüftungsbohrung 7 liegt.

Dieser Kegel 9 hat den Zweck, mit seiner Spitze und damit mit der unteren Öffnung der Entlüftungsbohrung 7 unter die Oberfläche des Heizungswassers zu tauchen, so daß die im Heizungswasser befindlichen Luftblasen ungehindert in die Lüftungsbohrung gelangen können und auf dem Wasserspiegel möglicherweise aufschwimmende Feststoffteilchen die Entlüftungsbohrung nicht blockieren können.

Die Höhe des Kegels 9 und damit die Länge der Entlüftungsbohrung 7 ist daher auch so bemessen, daß der oben geschilderte Effekt der Vermeidung einer Blockierung der Bohrung erreicht wird. Für den Querschnitt der Entlüftungsbohrung 7 haben sich Werte bewährt, die zwischen 1/10 bis 1/100 des Innenquerschnitts der Abzweigmuffe 4 bzw. Entlüftungskammer 5 betragen, jedoch sind auch andere Durchmesser für die Entlüftungsbohrung möglich, wobei insbesondere dann, wenn mehrere Entlüftungsbohrungen nebeneinander Verwendung finden, eine entsprechende Abstimmung mit dem Querschnitt der Entlüftungskammer 5 zu erfolgen hat.

## Patentansprüche

1. Übergangsstück aus Kunststoff zur Verbindung von Kunststoffrohrleitungen für Warmwasserheizungen, bestehend aus einem T-förmigen Muffenkörper, in dessen beide miteinander fluchtende Anschlußmuffen Rohrenden der Warmwasserleitungsrohre einschweißbar sind, **dadurch gekennzeichnet,** daß die den rechtwinkeligen Abzweig bildende Muffe (4) des T-förmigen Muffenkörpers (1) eine Entlüftungskammer (5) für den Heizungswasserkreislauf hat und in ihrer Bodenwand (6) wenigstens eine Entlüftungsbohrung (7) aufweist, die in den von dem Heizungswasser durchströmten Muffenkörperquerschnitt (8) mündet, an den die beiden Anschlußmuffen (2, 3) angrenzen.

2. Übergangsstück nach Anspruch 1, **dadurch gekennzeichnet,** daß die wenigstens eine Entlüftungsbohrung (7) aufweisende Bodenwand (6) im Bereich dieser Bohrung verstärkt ist.

3. Übergangsstück nach Anspruch 2, **dadurch gekennzeichnet,** daß die Verstärkung die Form eines in die Entlüftungskammer (5) hineinragenden Kegels (9) hat, in dessen Längsachse die Entlüftungsbohrung (7) angeordnet ist.

4. Übergangsstück nach einem der Ansprüche 1 bis 3, **dadurch gekennzeichnet,** daß der Querschnitt der Entlüftungsbohrung (7) 1/10 bis 1/100 des Innenquerschnitts der Abzweigmuffe (4) entspricht.

5. Übergangsstück nach einem der Ansprüche 1 bis 4, **dadurch gekennzeichnet,** daß die Entlüftungskammer (5) mittels eines Verbindungsrohrstücks, das in die Entlüftungskammer einsetzbar ist, an die Konvektoren oder Heizungsrohrschlangen der Warmwasserheizung anschließbar ist.
